# EUROPÄISCHE PATENTSCHRIFT

(11) **EP 2 551 194 B1**
(45) Veröffentlichungstag und Bekanntmachung des Hinweises auf die Patenterteilung: **14.09.2016**
(21) Anmeldenummer: 12177756.9
(22) Anmeldetag: 25.07.2012
(51) Int. Cl.: B64D 9/00

(54) **Flugzeug mit Frachtraum aufweisend Roboter und Frachtaufbewahrungs-Einrichtung**
Aircraft with cargo hold comprising robot and cargo storage device
Avion avec soute à fret dotée d'un robot et d'un dispositif de conservation

(30) Priorität: 29.07.2011 DE 102011052277; 29.07.2011 DE 102011052299
(43) Veröffentlichungstag der Anmeldung: 30.01.2013
(73) Patentinhaber: Telair International GmbH, 83714 Miesbach (DE)
(72) Erfinder: Huber, Thomas, 83727 Schliersee (DE)
(74) Vertreter: Bohnenberger, Johannes

(56) Entgegenhaltungen:
- EP-A2- 1 070 664
- EP-A2- 1 764 304
- DE-A1-102006 022 144
- DE-A1-102007 023 658
- DE-A1-102009 052 547
- DE-U1- 8 813 477
- FR-A1- 2 669 873
- US-A1- 2007 284 481
- US-A1- 2010 145 502
- US-B1- 6 874 735

## Beschreibung

Die Erfindung betrifft einen Frachtraum eines Flugzeugs, umfassend einen Roboter mit mindestens einem Roboterarm.

Es wird im kommerziellen Flugzeugbereich zwischen Großraumflugzeugen ("wide body aircrafts"), Standardrumpfflugzeugen ("narrow body aircrafts") und Zubringerflugzeugen ("regional jets") unterschieden. Bei den Großraumflugzeugen werden in den Unterdeckfrachträumen ("lower deck cargo compartment") üblicherweise standardisierte Frachteinheiten, insbesondere Frachtcontainer und/oder Frachtpaletten, verladen.

Im hinteren Bereich der Großraumflugzeuge gibt es üblicherweise noch ein kleineres Massengepäckabteil ("bulk cargo compartment") um sperriges Gepäck und/oder spät abgegebenes Gepäck, das nach einer Landung schnell wieder zur Verfügung stehen muss (z.B. Rollstühle) zu verladen. Üblicherweise sind die Frachträume von derartigen Großraumflugzeugen ca. 1,6 Meter hoch und können mit Containern vom Typ LD-3 beladen werden.

Demgegenüber ist der Unterdeckfrachtraum eines Standardrumpfflugzeuges wesentlich kleiner dimensioniert. Beim Beladen dieser Frachträume wird mitunter nicht auf entsprechende Frachteinheiten (z.B. Frachtcontainer) zurückgegriffen. Stattdessen erfolgt eine so genannte Massengüterverladung ("bulk loading"). Die einzelnen Frachtstücke werden außerhalb des Flugzeugs auf ein Förderband gelegt, welches diese zum Eingangsbereich bzw. zur Ladeluke des Frachtraums bringt. Dort sitzt eine Person, welche das Gepäck weiter nach hinten ins Innere des Frachtraums wirft oder schiebt. Im Inneren des Frachtraums befindet sich eine weitere Person, welche das Gepäck sukzessiv aufstapelt. Diese Frachträume sind üblicherweise ca. 1 Meter hoch, so dass sich das Verladepersonal darin nur schwer bewegen kann. Es gibt Standardrumpfflugzeuge (z.B. die A320-Serie), die ein Verladen von besonderen Frachtcontainern ermöglichen. Das Verladen dieser Container ist problematisch.

Bei Zubringerflugzeugen befindet sich ein spezieller, ebenfalls kleiner Frachtraum hinter der Kabine, z.B. auf gleicher Höhe wie die Kabine. Des Weiteren gibt es entsprechende Flugzeuge, die sehr klein dimensionierte Frachträume unterhalb der Kabine haben, die im Wesentlichen den Unterdeckfrachträumen der Standardrumpfflugzeuge entsprechen. Diese sind jedoch sehr klein, haben meist nur den Querschnitt eines einzelnen Koffers und eine Höhe von unter einem halben Meter. Eine Beladung derartiger Frachträume erfolgt meistens völlig manuell.

In der Vergangenheit wurde es bereits versucht, für Standardrumpfflugzeuge das Beladen zu vereinfachen, da die herkömmlichen hauptsächlich manuellen Ladeverfahren zeitaufwändig - somit teuer - und für das Bodenpersonal ungesund sind. So ist das Bodenpersonal gezwungen, schwere Frachtstücke (z.B. 35 kg) in stark beengten Räumen zu heben und zu verstauen.

Beispielsweise war es angedacht, Frachtförderbänder innerhalb der Frachträume zu installieren, die die Frachtstücke in ungeordneter Art und Weise innerhalb des Frachtraums verstauen (WO 2008/118076 A1).

Eine derzeit gängige Lösung ist der "sliding carpet". Hierbei werden der Bodenbereich sowie Teile des Seitenbereichs des Frachtraums mit einem Förderband ausgekleidet. Eine Person, die im Eingangsbereich des Flugzeugs sitzt, schichtet die ankommenden Koffer zu einer Reihe bzw. eine Art von Mauer von Frachtstücken auf. Danach werden die Förderbänder derart verfahren, dass sich Platz für das Aufschichten einer weiteren Reihe ergibt. Der Vorgang wird so lange wiederholt, bis der gesamte Frachtraum vollständig beladen ist. Beim Entladen werden die einzelnen Reihen sukzessiv wieder abgetragen und die Förderbänder in entsprechender Weise verfahren.

Ein Nachteil dieses Ladeverfahrens besteht darin, dass die Installation der Förderbänder Laderaum verbraucht und das Gewicht der Einrichtung erheblich zu dem Gesamtgewicht des Flugzeugs beiträgt. Dies bedeutet, dass weniger Fracht befördert werden kann und der Treibstoffverbrauch steigt. Dies führt zu höheren Transportkosten. Des Weiteren muss man gewisse Abstände zu den Seitenwänden ("lining") und zur Decke ("ceiling") einhalten, da sonst die Frachtstücke während der Bewegung der Förderbänder anliegen. Dies kann zu einer Beschädigung des Flugzeugs, dem Umfallen einer bereits aufgestapelten Frachtstückreihe oder dem Verkeilen von Frachtstücken führen. Des Weiteren erweist es sich als äußerst problematisch, die verladenen Frachtstücke in geeigneter Weise abzusichern. So lassen sich keine Zwischennetze einziehen, die während des Flugs auftretende Lasten entlang der Längsrichtung - X-Richtung - des Flugzeuges aufnehmen und in den Rumpf des Flugzeugs ableiten. Fehlen derartige Netze, so können sich die einzelnen Frachtstücke im gesamten Frachtraum als eine Einheit bewegen.

Aus der WO 98/54073 ist ein Verladesystem bekannt, bei dem das Bodenpersonal mittels eines ausfahrbaren Förderbands und eines am Ende dieses Förderbands angeordneten Verladetischs unterstützt wird. Dieses System wird nur als Be- und Entladehilfe verwendet und bleibt danach am Boden. Im Endeffekt werden innerhalb des Flugzeuges mehrere kleine Förderbänder nacheinander so arrangiert, dass sich entlang der Längsrichtung ein schmales durchgehendes Förderband ergibt, das sich von der Ladeluke bis in den hinteren Bereich des Frachtraums erstreckt. Ankommende Frachtstücke werden auf dieses Förderband verladen und bis zum Ende des Frachtraums transportiert. Dort erfolgt dann ein Aufstapeln der Frachtstücke, wie dies bereits beschrieben wurde. Sobald eine Reihe voll ist, wird das Förderband mit dem zugehörigen Ladetisch sukzessiv zurückgezogen. Diese Lösung hat mehrere Nachteile. Zum einen ist das Verladesystem teuer und sehr wartungsanfällig. Des Weiteren fallen häufig Frachtstücke von dem schmalen Frachtband, so dass das Bodenpersonal wiederum manuell nachhelfen muss. Schließlich besteht ein erhebliches Risiko, dass das Flugzeug beim temporären Installieren des Frachtladesystems beschädigt wird. Das Bodenpersonal muss entsprechend geschult werden, um die Installation sicher bewerkstelligen zu können.

Aus der DE 10 2010 013 219 A1 ist ein Aufzug für den Transport von Frachtstücken zwischen verschiedenen Decks des Flugzeugs bekannt.

Weitere Lösungen sind bekannt (z.B. aus der WO 2009/007549 A2), die jedoch allesamt erhebliche Nachteile mit sich bringen.

Allgemein ist man daher bestrebt, in zunehmendem Maße Frachteinheiten, insbesondere Frachtcontainer, zum schnellen Be- und Entladen von Flugzeugen einzusetzen. Jedoch hat auch die Verwendung von Frachtcontainern zahlreiche Nachteile. So braucht man unterschiedliche Container für unterschiedliche Flugzeugtypen (z.B. Großraumflugzeuge, Standardrumpfflugzeuge). Wenn die einzelnen Frachtcontainer nicht genutzt werden, müssen diese gelagert werden. Zahlreiche Flughäfen verfügen aber zum aktuellen Zeitpunkt nicht über ausreichende Kapazitäten, um diese Frachtcontainer in geeigneter Weise zu lagern. Frachtcontainer haben ein relativ hohes Eigengewicht, so dass deren Transport im Flugzeug teuer ist. Des Weiteren müssen Frachtcontainer relativ einfach aufgebaut sein, so dass es nicht möglich ist, diese optimal an die Struktur der Flugzeuge anzupassen. Insofern führt der Einsatz von Frachtcontainern zu einem Verlust des nutzbaren Frachtraums. Des Weiteren muss noch angemerkt werden, dass sowohl die Wartung als auch die Anschaffung von Frachtcontainern nicht unerhebliche Kosten verursachen.

Zahlreiche Flughäfen verfügen auch nicht über die nötige Ausrüstung, um Frachtcontainer schnell und effizient zu verladen. Letztendlich kostet auch das Be- und Entladen der Frachtcontainer Zeit, so dass die Vor- und Nachteile der Verwendung von Containern genau ausgewertet werden müssen, um ein optimales Ergebnis zu erzielen. Daher werden Flugzeuge weiterhin mit Massengepäckabteilungen ausgestattet.

Ein weiteres Problem, das bei dem Lufttransport von Frachtstücken für Passagiere auftritt, besteht darin, dass bereits das Aufgeben von Frachtstücken bei vielen Passagieren unerwünscht ist. So möchte der Passagier bevorzugt sämtliche Gepäckstücke mit in den Passagierraum nehmen, um so auf diese Gepäckstücke jederzeit Zugriff zu haben. Ein langwieriges Aufgeben der Frachtstücke an einem Schalter entfällt dann. Ebenso ergibt sich für den Passagier der Vorteil, dass er beim Verlassen des Flugzeugs nicht darauf warten muss, bis sein Gepäck entladen und ihm letztendlich übergeben wurde. Es zeichnet sich also ein Trend ab, bei dem mehr und mehr Frachtstücke in den Passagierraum mitgenommen werden. Bestehende Passagierräume verfügen jedoch häufig nicht über eine ausreichende Kapazität, um all diese Frachtstücke aufzunehmen. Selbst wenn die Frachtstücke durch das Vorsehen von ausreichendem Stauraum im Passagierraum aufgenommen werden können, ergeben sich nicht zuletzt für den Flugzeugbetreiber erhebliche Probleme. Zum einen muss das Gepäck sehr genau untersucht werden, um Terroranschläge zu vermeiden. Des Weiteren kann unsachgemäß verstautes Gepäck zu einer Verletzung der Passagiere führen. Letztendlich führt das Vorsehen von entsprechenden Stauräumen auch dazu, dass für die Passagiere nur noch wenig Platz in dem Passagierraum verbleibt. Dies wirkt sich auf das Wohlbefinden des Passagiers aus.

Um diesem Problem zumindest teilweise Rechnung zu tragen, schlägt die WO 2007/051593 vor, geeignete Frachtcontainer unmittelbar am Eingang des Flugzeugs vorzusehen, die von den Passagieren beladen werden können. Diese Frachtcontainer werden dann in den Frachtraum des Flugzeugs gebracht, transportiert und nach der Landung wieder derart aufgestellt, dass die Passagiere ihre eigenen Frachtstücke entnehmen können. Während des Fluges können auf diese Frachtstücke jedoch nicht zugegriffen werden.

Die DE 10 2006 022 144 A1 und die DE 10 2007 023 658 A1 offenbaren Flugzeuge mit automatisierten Aufnahme-, Stau- und Ausgabevorrichtungen für Handgepäck aus dem Passagierraum.

Ausgehend von diesem Stand der Technik ist es Aufgabe der vorliegenden Erfindung, ein besser ausgestattetes Flugzeug bereitzustellen, so dass ein komfortabler und effizienter Transport von Frachtstücken erfolgen kann. Des Weiteren soll der Be- und Entladevorgang des Frachtraums vereinfacht werden. Insgesamt soll es dem Passagier ermöglicht werden, seine Frachtstücke möglichst schnell und unkompliziert aufzugeben, wobei er auf diese jederzeit zugreifen kann.

Diese Aufgabe wird durch ein Flugzeug gemäß dem Anspruch 1 gelöst.

Insbesondere wird die Aufgabe durch den Frachtraum eines Flugzeugs gelöst, der einen Roboter mit mindestens einem Roboterarm mit mindestens einem Aufnahmewerkzeug zur Aufnahme von Frachtstücken umfasst, wobei der Roboter verschiebbar an einer Deckenkonstruktion des Frachtraums angeordnet ist.

Diese Deckenkonstruktion kann beispielsweise die Mitteldecke des Flugzeugs oder eine beliebige Konstruktion sein, die sich oberhalb des Frachtdecks befindet. Setzt man ein entsprechend hängendes Robotersystem ein, so lässt sich der Frachtraum optimal ausnutzen. Der Verladevorgang kann selbst in beengten Frachträumen vollautomatisch durchgeführt werden, wobei der Roboter den Be- und Entladevorgang übernimmt. Der Frachtraum kann dann optimal ausgenutzt werden, da unter anderem auf begehbare Flächen verzichtet werden kann. Des Weiteren ist es nicht notwendig, standardisierte Bahnen vorzusehen, auf denen Frachtcontainer oder Frachtpaletten transportiert werden können. Auch Bereiche, die sich beispielsweise zwischen den Spanten der Flugzeugkonstruktion befinden, können voll ausgenutzt werden. Das System ist besonders dazu geeignet, in kleinen Frachträumen (z.B. mit einer geringen Höhe) zu agieren.

Der Frachtraum kann eine an der Deckenkonstruktion befestigte Halteeinrichtung, insbesondere mit mindestens einer Linearführung und eine Antriebseinheit zum Verfahren des an der Halteeinrichtung befestigten Roboters, vorzugsweise zumindest entlang einer Längsachse des Flugzeugs, umfassen.

Es ist denkbar, dass der Roboterarm derart ausgestattet ist, dass ein statisch befestigter Roboter auf sämtliche notwendigen Bereiche des Frachtraums Zugriff hat. Alternativ wäre es auch möglich, mehrere Roboter derart anzuordnen, dass diese das Be- und Entladen in einer Kooperation durchführen. Beispielsweise kann ein erster Roboter ein Frachtstück an einen zweiten Roboter übergeben. Vorzugsweise lässt sich der Roboter jedoch innerhalb des Frachtraums verfahren, so dass größere Distanzen zurückgelegt werden können. In einem Ausführungsbeispiel sind hierfür an der Deckenkonstruktion Linearführungen vorgesehen, an denen der Roboter aufgehängt ist, wobei die Antriebseinheit dafür sorgt, dass der Roboter entlang dieser Linearführungen verfahren werden kann. Diese Halteeinrichtung sollte vorzugsweise zumindest derart ausgestaltet sein, dass sich der Roboter entlang der Längsachse des Flugzeugs verfahren lässt.

Das Verfahren des Roboters entlang der Halteeinrichtung führt zu einem effizienteren Einsatz und ermöglicht es, Frachtstücke mit hohem Gewicht zu transportieren, da der Roboterarm deutlich kürzer ausgestaltet werden kann (geringer Hebel).

In einer Ausführungsform kann die Halteeinrichtung eine umlaufende Linearführung umfassen, an der mindestens zwei Roboter befestigt sind. Die Effizienz des Ladesystems lässt sich also weiter erhöhen, indem mehrere Roboter vorgesehen sind, die sich jeweils entlang einer vorgesehenen Halteeinrichtung verfahren lassen. Wenn es sich bei der Halteeinrichtung um eine umlaufende Linearführung handelt, können die Roboter parallel nebeneinander agieren, ohne dass es zu Konfliktsituationen kommt. Beispielsweise kann ein erster Roboter an der Ladeluke des Flugzeugs ein erstes Frachtstück aufnehmen und dieses ins Innere des Frachtraums transportieren. Danach kann ein zweiter Roboter ein zweites Frachtstück an der Ladeluke aufnehmen und dem ersten Roboter folgen. Während der zweite Roboter noch mit dem Verstauen des Frachtstücks beschäftigt ist, kann der erste Roboter an einer parallel verlaufenden Linearführung zurück zur Ladeluke fahren, um weitere Frachtstücke aufzunehmen. Es ergibt sich eine Art Kreisbetrieb, der zu einem sehr schnellen Be- und Entladevorgang führt.

Der Frachtraum umfasst ein Frachtdeck mit passiven Frachtfördereinrichtungen, insbesondere Kugelmatten und/oder Rollen und/oder Rollenbahnen, wobei der Roboter zum Verschieben von auf den Frachtfördereinrichtungen gelagerten Frachteinheiten, insbesondere Frachtcontainern und/oder Frachtpaletten, ausgebildet und/oder angeordnet ist. Die Roboter können also nicht nur dazu verwendet werden, um einzelne Frachtstücke - quasi manuell - aufzunehmen und zu verladen. Vielmehr können die Roboter auch dazu eingesetzt werden, um Frachtcontainer an eine vorgegebene Position zu bringen. Theoretisch ist es denkbar, dass der Roboter derart dimensioniert ist, dass er entsprechende Frachteinheiten anhebt und nach Art eines Lastenkrans an der vorgegebenen Position absetzt. Vorzugsweise sind jedoch passive Frachtfördereinrichtungen, beispielsweise Frachtfördereinrichtungen ohne einen eigenen insbesondere elektrischen Antrieb, vorgesehen, auf denen die Frachteinheiten mit geringem Kraftaufwand bewegt werden können. Im Endeffekt nehmen die Frachtfördereinrichtungen die Hauptlast des Frachtcontainers auf. Der Roboter wird lediglich dazu verwendet, um die Frachteinheiten auf den Frachtfördereinrichtungen in eine vorgegebene Richtung zu bewegen, insbesondere zu schieben. Insofern ist es möglich, auf aktive Frachtfördereinrichtungen, beispielsweise Rollenantriebseinheiten (PDU, Power Drive Unit) zu verzichten. Der Roboter muss hierfür nicht derart ausgestattet werden, dass er die gesamten Lasten selbstständig tragen kann.

Insgesamt lässt sich der Roboter also bei unterschiedlichen Ladearten verwenden, wobei einzelne Frachtstücke nach Art einer Massengüterverladung und Frachteinheiten mit einer Vielzahl von Frachtstücken verladen werden.

Vorzugsweise umfasst der Frachtraum eine Vielzahl von Frachtfächern, die jeweils durch eine Vielzahl von Seitenwänden ausgebildet sind und mindestens eine Frachtöffnung zum Einlegen und Herausnehmen von Frachtstücken aufweisen, wobei zumindest einige der Seitenwände derart flexibel und/oder drehbeweglich und/oder verschiebebeweglich miteinander verbunden sind, dass die Abmessungen zumindest eines Frachtfachs aufgrund der Verschiebung mindestens einer Seitenwand veränderbar sind.

Eine derartige Frachtaufbewahrungseinrichtung kann eine Art Regal sein, das an den Seitenwänden des Frachtraums angeordnet oder integriert ist. Alternativ kann diese Frachtaufbewahrungseinrichtung auch auf dem Boden des Frachtraums angeordnet sein, so dass sich die Frachtfächer im Wesentlichen senkrecht zu der Bodenfläche erstrecken, wobei die Öffnungen nach oben zeigen.

Die Frachtaufbewahrungseinrichtung ermöglicht es insbesondere, Einzelfrachtstücke, beispielsweise Koffer, Taschen, Rucksäcke usw., effizient zu verladen. Die Frachtstücke werden in geeigneter Weise in die Frachtfächer gelegt, die danach oder davor an die Größe der Frachtstücke angepasst werden. Insofern lässt sich der vorhandene Platz optimal ausnützen, wobei für jedes Frachtstück ein eigenes Frachtfach bereitgestellt wird. Ein späteres Wiederauffinden des Frachtstücks wird erheblich erleichtert. Insofern können gezielt einzelne Frachtstücke entladen oder vorübergehend für den Passagier bereitgestellt werden. Die erfindungsgemäße Frachtaufbewahrungs-Einrichtung ermöglicht es des Weiteren, weiche Frachtstücke derart zusammenzudrücken, dass der vorhandene Platz besser ausgenutzt wird.

Theoretisch ist es möglich, beliebige Materialien für die Seitenwände der Frachtfächer zu verwenden. Beispielsweise kann ein Hängeregal aus Stoff erfindungsgemäß genutzt werden. In einem Ausführungsbeispiel werden jedoch starre Materialien, insbesondere Kunststoffe und/oder Metalllegierungen, verwendet.

Die Frachtaufbewahrungs-Einrichtung kann Längsunterteilungen und Querunterteilungen zur Bildung der Seitenwände umfassen. Vorzugsweise lassen sich die Längsunterteilungen gegenüber den Querunterteilungen und/oder die Querunterteilungen gegenüber den Längsunterteilungen verschieben. Eine derartige Verschiebung kann eine Parallelverschiebung sein. Es ist denkbar, mehrere Unterteilungen nach der Art eines Gitters anzuordnen, um die einzelnen Frachtfächer auszubilden. Vorzugsweise lassen sich mindestens eine Längsunterteilung oder mindestens eine Querunterteilung derart verschieben, dass die Abmessungen der zugehörigen Frachtfächer an die entsprechenden Frachtstücke angepasst werden.

Mindestens ein Frachtfach kann eine Verschlusseinrichtung, insbesondere ein Rollo und/oder ein Netz zum zumindest teilweisen Verschließen der Frachtöffnung aufweisen. Es ist vorteilhaft, wenn die Frachtöffnungen während des Fluges verschlossen sind, so dass die eingelagerten Frachtstücke nicht herausfallen können.

In Verbindung mit dem beschriebenen Roboter sind zahlreiche positive Synergieeffekte vorhanden.

Bevorzugt umfasst der Frachtraum mindestens eine Frachtaufbewahrungseinrichtung mit einer Vielzahl von Frachtfächern, wobei mindestens eines der Frachtfächer
derart ausgebildet ist, dass es von oben, insbesondere in eine Richtung senkrecht zu einem dem Frachtdeck des Frachtraums, beladbar ist. Bei der genannten Frachtaufbewahrungs-Einrichtung kann es sich um eine Frachtaufbewahrungs-Einrichtung handeln, wie diese bereits beschrieben wurde. Es ist möglich, jeden beliebigen Frachtraum, auch den bereits beschriebenen, mit einer entsprechenden liegenden Frachtaufbewahrungs-Einrichtung auszustatten.

Die genannte Frachtaufbewahrungs-Einrichtung kann in dem Frachtraum eines Flugzeugs vorhandene Bereiche besser ausnutzen. Beispielsweise können die konkaven Bereiche, die sich aufgrund der Ausgestaltung des Flugzeugs im Bodenbereich ergeben, vollständig ausgenutzt werden. Die beschriebene Frachtaufbewahrungs-Einrichtung ist besonders dazu geeignet, durch den Roboter, der vorzugsweise an einer Deckenkonstruktion angeordnet ist, beladen zu werden. Bei einer Beladung per Roboter kann auf einen begehbaren Steg für das Personal verzichtet werden, so dass der Frachtraum sehr effizient genutzt werden kann.

Ein erfindungsgemäßes Flugzeug ermöglicht es, dass die Passagiere einzelne Frachtstücke, vorzugsweise Handgepäck, mit in den Passagierraum nehmen. Dort wird das Frachtstück dann abgegeben und nicht im Passagierraum, sondern im Frachtraum, verstaut. Vorzugsweise ist das Flugzeug derart ausgerüstet, dass der Passagier auch während des Flugs wieder auf das Frachtstück zugreifen kann. Beispielsweise kann der Roboter nach einer Verstauung des Frachtstücks dieses auf Anfrage wieder heraussuchen und mittelbar oder unmittelbar an den Passagier übergeben.

Der Roboter umfasst ein, vorzugsweise mindestens zwei Aufnahmewerkzeuge zur Aufnahme von Frachtstücken. Eine entsprechende Vielzahl von Aufnahmewerkzeugen ermöglicht es, unterschiedliche Frachtstücke in geeigneter Weise aufzunehmen und zu transportieren.

Das Flugzeug, insbesondere der Roboter, kann mindestens eine Bilderfassungs-einrichtung zur Bereitstellung mindestens eines Bildes eines zu befördernden Frachtstücks umfassen, wobei der Roboter dazu ausgebildet ist, anhand des Bildes eines der Aufnahmewerkzeuge zur Aufnahme des zu befördernden Frachtstücks auszuwählen. Es ist denkbar, die Auswahl eines geeigneten Aufnahmewerkzeugs durch einen beliebigen Mechanismus zu steuern. Beispielsweise können Frachtstücke für ein erstes Aufnahmewerkzeug in einem ersten Bereich, und Frachtstücke für ein zweites Aufnahmewerkzeug in einem zweiten Bereich bereitgestellt werden. Des Weiteren können die Frachtstücke mit einer entsprechenden digitalen Kennzeichnung (z.B. RFID, Bluetooth, 2D-Codes, 3D-Codes) versehen werden, so dass der Roboter anhand dieser Informationen erkennt, welches Aufnahmewerkzeug verwendet werden soll. Des Weiteren kann bei der Aufgabe des Frachtstücks eine Eingabe erfolgen, die es ermöglicht, ein geeignetes Aufnahmewerkzeug auszuwählen. Vorzugsweise erfolgt eine Auswahl jedoch aufgrund eines digitalen Bilderfassungssystems, bei dem verschiedene Frachtstücke (z.B. Rucksack, Hartschalenkoffer) automatisch erkannt werden. Alternativ oder zusätzlich kann eine Erkennung anhand von mechanischen Prüfergebnissen erfolgen. Beispielsweise kann der Roboter über ein Greifwerkzeug verfügen, das das zu befördernde Frachtstück (leicht) zusammendrückt und mittels eines oder mehrerer Kraftsensoren die Härte des Frachtstücks ermittelt.

Nach der Bilderkennung des Frachtstücks, welche vorzugsweise auch grobe Abmessungen dessen erfasst, kann eine "Geruchsidentifizierung" erfolgen. Beispielsweise können entsprechende Sensoren vorgesehen werden, um verdächtige Chemikalien (z.B. für Bomben) zu identifizieren. Diese Prüfung kann in vorteilhafter Weise mit dem bereits beschriebenen Zusammendrücken des Frachtstücks erfolgen. Nach oder während der Geruchsidentifizierung kann eine zusätzliche Dichteprüfung, wie bereits beschrieben, erfolgen. Diese Dichteprüfung kann zusätzlich dazu verwendet werden, um für das Aufheben eines bestimmten Frachtstücks die maximale Zudrückkraft zu ermitteln.

Man kann eine Gewichtsermittlung durch geeignete Sensoren vornehmen. Die Gewichtsermittlung kann beispielsweise dazu verwendet werden, um besonders schwere Gegenstände langsamer und/oder vorsichtiger zu bewegen. Des Weiteren kann das bestimmte Gewicht maßgeblich dafür sein, wo das entsprechende Frachtstück abgelegt wird. Wird zum Ablegen des Frachtstücks beispielsweise ein Regal verwendet, so sollten schwere Frachtstücke wesentlich weiter unten gelagert werden als leichte Frachtstücke.

Das Aufnahmewerkzeug kann mindestens einen Unterdruckkopf zur Halterung von Frachtstücken mit einer zumindest teilweise luftundurchlässigen Außenhaut umfassen. Durch einen entsprechenden Werkzeugkopf lassen sich entsprechende Frachtstücke sehr einfach und sehr effizient aufnehmen und transportieren.

Wie bereits erläutert, kann mindestens eines der Aufnahmewerkzeuge mindestens ein Greifwerkzeug zum Greifen von Frachtstücken und/oder mindestens ein Förderband zum Aufnehmen und Ablegen von Frachtstücken umfassen. Derartige Aufnahmewerkzeuge eignen sich besonders, um luftdurchlässige Frachtstücke und/oder Frachtstücke aus einem weichen Material aufzunehmen und zu transportieren.

Das Aufnahmewerkzeug kann in diesen Fällen eine Art Miniförderband sein, welches das Gepäckstück durch ein Antreiben des Förderbands auflädt oder ablädt.

Ein mit einem entsprechenden Förderband ausgestattetes Aufnahmewerkzeug kann des Weiteren über Seitenbegrenzungen verfügen, die das Frachtstück gegebenenfalls nach einem Aufnehmen zusammendrücken und somit greifen können. Des Weiteren kann dieser Mechanismus verwendet werden, um die Dichte des Frachtstücks zu ermitteln oder andere Messungen vorzunehmen.

Alternativ kann eine Art "Greifergabel" verwendet werden, wie diese beispielsweise bei Hängekränen eingesetzt werden. Theoretisch wäre es auch denkbar, Greifwerkzeuge vorzusehen, die im Wesentlichen menschliche Hände nachbilden, wobei beispielsweise in der Gabelkontur biegsame Abschnitte vorgesehen sind.

Es ist denkbar, die genannten Greifwerkzeuge derart zu optimieren, dass diese zum Greifen von Frachtstücken mit einer Maximalabmessung von ca. 55 x 40 x 20 cm optimiert sind.

Mittels der genannten Frachtverwaltungs-Einrichtung wird es ermöglicht, dass Passagieren anhand eines Codes ein Frachtstück ausgehändigt wird, das sich nicht im Passagierraum, befindet. Dieser Vorgang kann automatisch durchgeführt werden. Insofern kann der Passagierraum im Wesentlichen frei von Frachtstücken sein, die nicht benötigt werden. Die Frachtverwaltungs-Einrichtung ermöglicht es, den Einsteige- und/oder Aussteigevorgang zu optimieren, da die Passagiere mit ihren Gepäckstücken das Flugzeug betreten und verlassen können. Auf zusätzliche Gepäcks- Aufgabe- und Abholvorgänge kann zumindest teilweise verzichtet werden.

Die Frachtstückeaufnahme-Einrichtung kann einen Lift und/oder eine Verbindungsöffnung und/oder eine Rutsche zum Transport der Frachtstücke aus dem Passagierraum in den Frachtraum umfassen. Die Frachtstückaufnahme-Einrichtung kann also das Verbindungsglied zwischen dem Passagierraum und dem Frachtraum sein, so dass das Abgeben und Abholen der Frachtstücke optimiert wird.

Die Eingabe-Einrichtung kann eine Leseeinrichtung für eine vorzugsweise am oder im Frachtstück angeordnete Identifikationseinrichtung, insbesondere einen passiven Transponder und/oder einen 2D- und/oder 3D-Code umfassen. Insofern ist es möglich, einem bestimmten Frachtstück automatisch eine Identifikationsnummer bzw. einen entsprechenden Code zuzuordnen, so dass dieses stets eindeutig identifiziert werden kann. Dieser Code kann unter anderem dazu verwendet werden, um zu einem späteren Zeitpunkt eine Abholung des Frachtstücks durchzuführen. Beispielsweise kann ein Passagier im Passagierraum einen entsprechenden Code an der Frachtstückaufnahme-Einrichtung eingeben, so dass die Frachtverwaltungs-Einrichtung weiß, welches Frachtstück angefordert wird. Alternativ ist es denkbar, den Passagier mit einer Identifikationsnummer oder einem Identifikationscode zu assoziieren, wobei die Frachtverwaltungs-Einrichtung weiß, welche Frachtstücke welchem Passagier zuzuordnen sind. Entsprechende Daten können in einer hierfür vorgesehenen Speichereinrichtung abgespeichert werden. Beispielsweise kann eine tabellarische Zuordnung von Personencodes zu Frachtstückcodes erfolgen.

Die Frachtverwaltungs-Einrichtung kann dazu ausgebildet sein, für ein in der Frachtstückaufnahmeeinrichtung eingegebenes Frachtstück eine Aufbewahrungsposition zu ermitteln, die Frachtstückverlade-Einrichtung derart anzusteuern, dass das Frachtstück in der Aufbewahrungsposition, vorzugsweise im Frachtraum, verstaut wird und die Aufbewahrungsposition vorzugsweise in Verbindung mit einem Code, der insbesondere dem Frachtstück und/oder einer Person zugeordnet ist, zu speichern. Insofern muss die Frachtverwaltungs-Einrichtung ein bestimmtes Frachtstück nicht suchen, sondern weiß genau, wo dieses verstaut ist. Demgemäß kann der Abholvorgang der Frachtstücke optimiert werden.

In einem Ausführungsbeispiel kann die Frachtverwaltungs-Einrichtung eine Passagiererfassungs-Einrichtung zur Erfassung der Position von mindestens einem Passagier und zur Bereitstellung von entsprechenden Positionsdaten aufweisen, wobei die Frachtverwaltungs-Einrichtung dazu ausgebildet ist, die Positionsdaten bei einem Entladevorgang zu berücksichtigen. Auch hierdurch kann ein Entladevorgang optimiert werden. Beispielsweise ist es denkbar, dass nach einer Landung alle Passagiere auf die von ihnen abgegebenen Frachtstücke zugreifen möchten. Die erfindungsgemäße Frachtverwaltungs-Einrichtung ist derart ausgestaltet, dass möglicherweise eine Bereitstellung der Frachtstücke nur an vorgegebenen Positionen innerhalb des Passagierraums erfolgt. Beispielsweise können die Frachtstücke durch eine oder mehrere Frachtstückaufnahme-Einrichtungen bereitgestellt werden. Nach der Landung des Flugzeugs ergibt sich möglicherweise eine zufällige Reihenfolge der Passagiere, in der diese eine entsprechende Frachtstückaufnahme-Einrichtung aufsuchen können. Die Daten der Passagiererfassungs-Einrichtung können vorteilhaft dazu verwendet werden, um zu bestimmen, in welcher Reihenfolge bestimmte Frachtstücke abgeholt werden. Insofern kann die Frachtverwaltungs-Einrichtung diese Reihenfolge berücksichtigen. Beispielsweise können entstehende Pausen von der Frachtstückverlade-Einrichtung dazu genutzt werden, Frachtstücke an einer geeigneten Position zu hinterlegen, so dass diese zeitnah einem bestimmten Passagier zur Verfügung gestellt werden können.

Vorzugsweise umfasst die Passagiererfassungseinrichtung eine Einrichtung zur Erfassung von vorzugsweise passiven Transpondern. Die einzelnen Passagiere können in vorteilhafter Weise mit entsprechenden Transpondern ausgestattet werden, so dass diese einfach identifiziert werden können.

Nachfolgend wird die Erfindung mittels mehrerer Ausführungsbeispiele beschrieben, die anhand von Abbildungen näher erläutert werden.

Hierbei zeigen:
- Fig. 1: eine schematische Außenansicht eines Flugzeugs;
- Fig. 2: einen Querschnitt durch den Rumpf des Flugzeugs aus Fig. 1, mit Unterdeckfrachtraum, Passagierraum und Oberdeckfrachtraum;
- Fig. 3: einen ersten Längsschnitt durch den Flugzeugrumpf aus Fig. 2;
- Fig. 4: einen zweiten Längsschnitt durch den Flugzeugrumpf aus Fig. 2;
- Fig. 5: einen ähnlichen Querschnitt wie den aus Fig. 2, wobei der Unterdeckfrachtraum mit zwei Robotern ausgestattet ist;
- Fig. 6: einzelne Komponenten einer Frachtverwaltungs-Einrichtung;
- Fig. 7: einen Endabschnitt von einem Roboter mit einem Greifwerkzeug;
- Fig. 8: eine Draufsicht auf ein Teil des Greifwerkzeugs aus Fig. 7;
- Fig. 9: eine perspektivische Seitenansicht eines Ablagewerkzeugs; und
- Fig. 10: eine Draufsicht auf ein Unterdeck.

Nachfolgend werden für gleiche und gleich wirkende Teile dieselben Bezugsziffern verwendet.

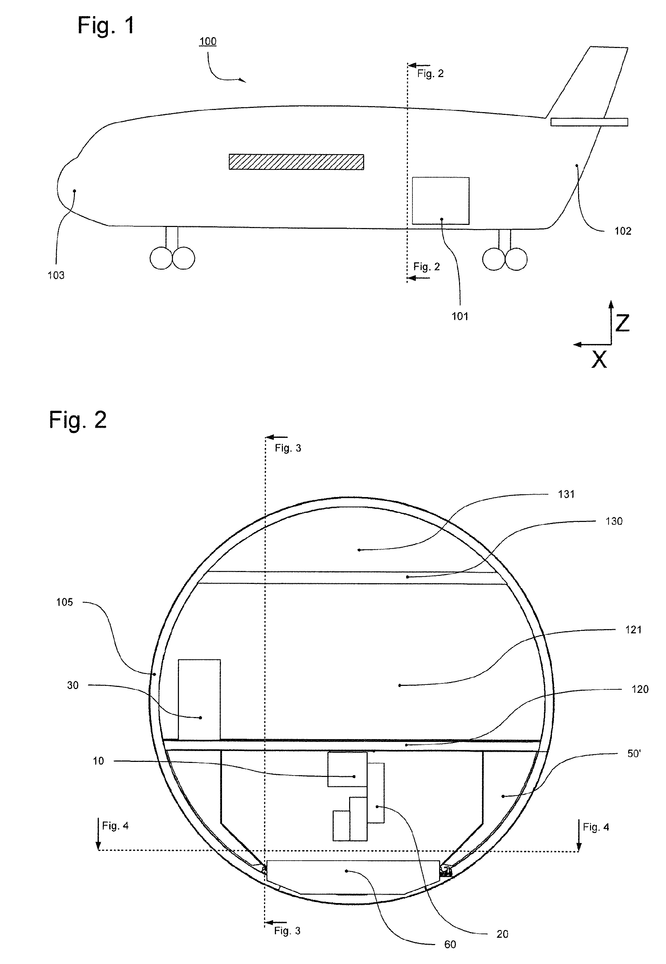

Fig. 1 zeigt eine Seitenansicht eines Flugzeugs 100. Das Flugzeug 100 erstreckt sich im Wesentlichen entlang einer Längsachse, nämlich der Flugzeuglängsrichtung X, wobei sich am vorderen Teil der Bug 103 und am hinteren Teil das Heck 102 befindet. Quer zur Flugzeuglängsrichtung X nach oben hin erstreckt sich die Z-Achse des Flugzeugs 100. An der Seite des Flugzeugs 100 befindet sich eine Ladeluke 101, über die Frachtstücke in das Flugzeug 100 eingeladen und aus diesem wieder ausgeladen werden können.

Fig. 2 zeigt einen Querschnitt durch das Flugzeug 100 aus Fig. 1. Der Flugzeugrumpf 105 des Flugzeugs 100 ist im Wesentlichen kreisförmig ausgebildet und durch ein Oberdeck 130 und ein Mitteldeck 120 in im Wesentlichen drei Segmente, nämlich einen Oberdeckfrachtraum 131 ("brown"-Bereich), einen Passagierraum 121 und einen Unterdeckfrachtraum 111, unterteilt. Der Unterdeckfrachtraum 111 und der Oberdeckfrachtraum 131 dienen zur Aufnahme von Frachtstücken, wobei der Passagierraum 121 zur Beherbergung von Passagieren ausgebildet ist. In dem in Fig. 2 gezeigten Ausführungsbeispiel ist der Unterdeckfrachtraum 111 mit einem Roboter 10 sowie mit einem ersten Frachtregal 50, einem zweiten Frachtregal 50' und einer Bodenfrachtaufnahme 60 ausgestattet. Der Oberdeckfrachtraum 131 weist keine entsprechende Ausstattung auf. Jedoch wäre es ohne Weiteres möglich, auch den Oberdeckfrachtraum 131 in entsprechender Weise auszustatten. Auch wäre es denkbar, ausschließlich den Oberdeckfrachtraum 131 mit einem Roboter 10, 10', Frachtregalen 50, 50' und/oder der Bodenfrachtaufnahme 60 zu versehen. Die Frachtregale 50, 50' und die Bodenfrachtaufnahme 60 sind Frachtaufbewahrungs-Einrichtungen, die dazu dienen, Frachtstücke aufzunehmen.

Gemäß einem ersten erfinderischen Gedanken wird der Roboter 10 mit einem geeigneten Roboterarm 20 dazu verwendet, die Frachtaufbewahrungs-Einrichtungen, insbesondere die Frachtregale 50, 50' und die Bodenfrachtaufnahme 60, mit Frachtstücken zu beladen. Des Weiteren kann der Roboter 10 dazu verwendet werden, Frachtstücke aus den Frachtaufbewahrungs-Einrichtungen heraus zu nehmen und somit das Flugzeug 100 zu entladen. Beispielsweise können die Frachtstücke an der Ladeluke 101 auf ein dort vorgesehenes Förderband gelegt werden.

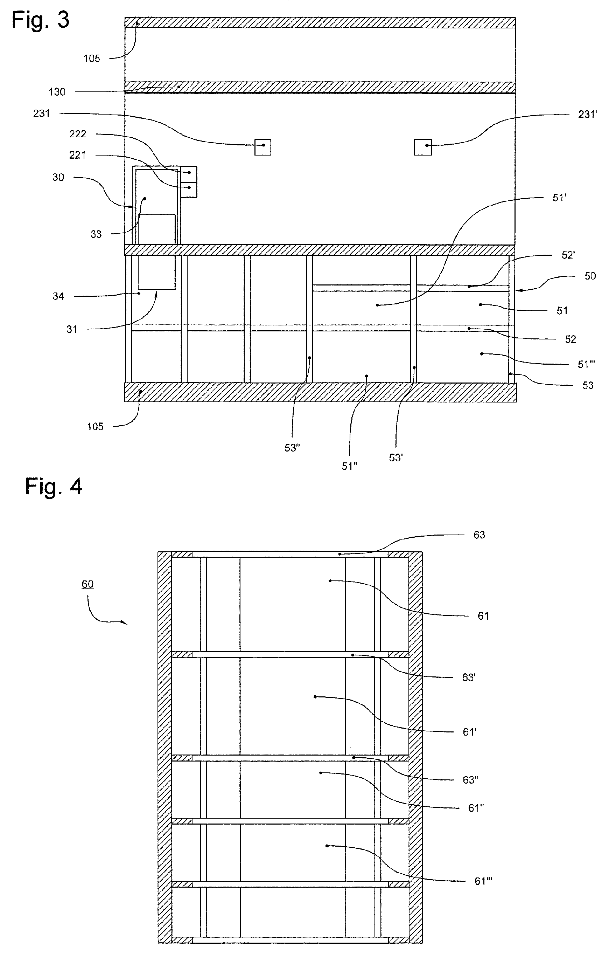

Gemäß einem weiteren erfinderischen Aspekt wird der Roboter 10 dazu verwendet, Frachtstücke, die von einem Passagier im Passagierraum 121 aufgegeben werden, im Unterdeckfrachtraum 111 zu verladen. Hierfür ist ein Lift 30 vorgesehen, der das Frachtstück im Passagierraum 121 aufnimmt und mittels einer Liftkabine 31 (vgl. Fig. 3) in den Unterdeckfrachtraum 111 fördert. Der Roboter 10 kann dann das Frachtstück aus der Liftkabine 31 entnehmen und beispielsweise in das Frachtregal 50 legen.

Gemäß einem weiteren erfinderischen Gedanken, wird der Roboter 10 ebenfalls dafür eingesetzt, Frachtstücke aus dem Unterdeckfrachtraum 111 im Passagierraum 121 bereitzustellen. Dies kann während eines Aufenthalts des Flugzeugs 100 auf einem Flughafen oder während des Flugs erfolgen. Sobald ein bestimmtes Frachtstück angefordert wird, entnimmt der Roboter 10 dieses Frachtstück aus einer der Frachtaufbewahrungs-Einrichtungen und legt dieses in die Liftkabine 31, so dass der Lift 30 das Frachtstück in den Passagierraum 121 bringen kann.

Fig. 3 zeigt unter anderem eine Frontansicht auf den Lift 30. Dieser weist eine obere Liftöffnung 33 und eine untere Liftöffnung 34 auf. Die obere Liftöffnung 33 mündet in den Passagierraum 121. Die untere Liftöffnung 34 mündet in den Unterdeckfrachtraum 111 und ist in das erste Frachtregal 50 integriert. An der Seite des Lifts 30 sind eine Eingabe-Einrichtung 221 und eine Ausgabeeinrichtung 222 angeordnet. In einem Ausführungsbeispiel führt ein Passagier ein Frachtstück in die Liftkabine 31 ein, die dieses in den Unterdeckfrachtraum 111 transportiert. Der Roboter 10 verlädt dann das Frachtstück in eine Frachtaufbewahrungs-Einrichtung. Daraufhin zeigt die Ausgabeeinrichtung 222 einen Code z.B. einen Zahlencode an. Der Passagier kann sich diesen Zahlencode merken oder notieren. Um sein Frachtstück wiederzuerlangen, muss er den Zahlencode in die Eingabe-Einrichtung 221 eingeben, wodurch das Frachtstück identifziert und vom Roboter 10 bereitgestellt werden kann.

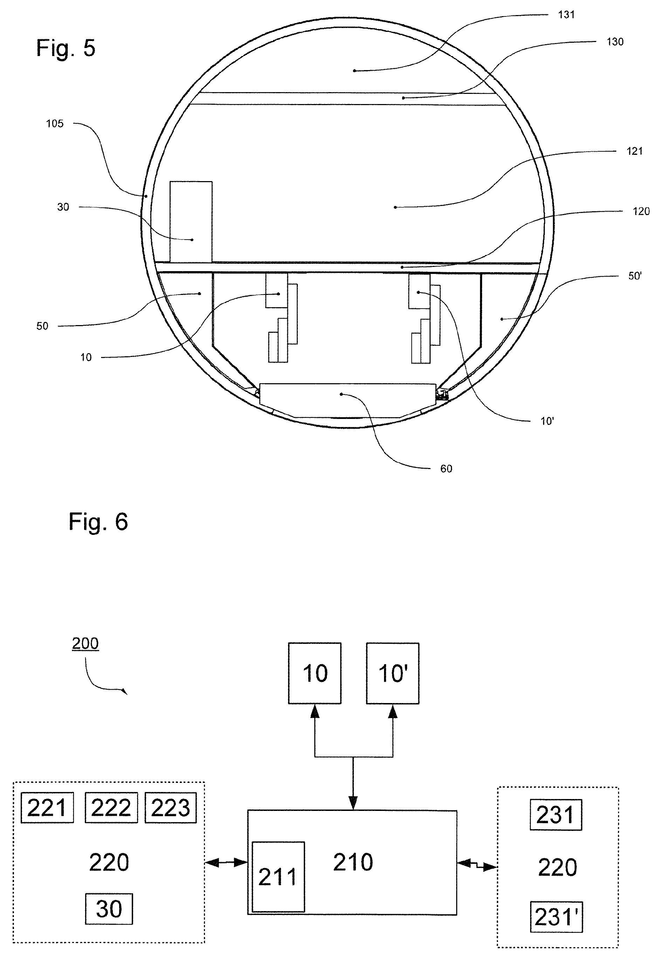

In einem weiteren Ausführungsbeispiel verfügt das Frachtstück über ein RFID-Tag, so dass eine RFID-Leseeinrichtung 223 (vgl. Fig. 6) eine auf diesem Tag gespeicherte Identifikationsnummer erfassen kann. Es ist möglich, dass der Passagier über ein weiteres RFID-Tag verfügt, das dem RFID-Tag des Frachtstücks zuordenbar ist. Insofern ist eine Anzeige einer Identifikationsnummer auf der Ausgabeeinrichtung 222 unnötig. Um sein Frachtstück wiederzuerlangen, legt der Passagier einfach sein RFID-Tag vor oder stellt sich in einer Position auf, in der die RFID-Leseeinrichtung 223 dieses RFID-Tag erfassen kann. Danach wird automatisch das zugehörige Frachtstück ermittelt und von dem Roboter 10 aus dem Unterdeckfrachtraum 111 geholt.

Um einen schnellen Zugriff auf die Frachtstücke für die Passagiere zu gewährleisten, können mehrere Roboter 10, 10' (vgl. Fig. 5) und/oder mehrere Lifte 30 vorgesehen werden.

Ein weiterer erfindungsgemäßer Gedanke schlägt sich in den Frachtaufbewahrungs-Einrichtungen nieder. Das erste Frachtregal 50 verfügt beispielsweise über eine Vielzahl von Frachtfächern 51 bis 51"'. Die einzelnen Frachtfächer 51 bis 51'" sind jeweils von vier Seitenwänden umgeben, die teilweise durch Längsunterteilungsbretter 52, 52' und Querunterteilungsbretter 53, 53' ausgebildet sind. Beispielsweise wird das Frachtfach 51' von dem ersten Längsunterteilungsbrett 52, dem zweiten Längsunterteilungsbrett 52', dem zweiten Querunterteilungsbrett 53 und dem dritten Querunterteilungsbrett 53" umgeben. Das erste Querunterteilungsbrett 53 bildet einen Abschluss des ersten Frachtregals 50.

In einem Ausführungsbeispiel sind die Querunterteilungsbretter 63', 63" derart verschiebbar auf einer Schiene angeordnet, dass sich die Frachtfächer 51",50'" beliebig verkleinern lassen. Dies ermöglicht es, das erste Frachtregal 50 optimal mit Frachtstücken zu beladen. Alternativ können die Querunterteilungsbretter 52, 52' verschiebbar angeordnet sein.

Geht man davon aus, dass lediglich die Querunterteilungsbretter 53' und 53" beweglich angeordnet sind, so könnte der Roboter 10 beim Verladen von Frachtstücken versuchen, jeweils gleich breite Frachtstücke in einer Spalte des ersten Frachtregals 50 anzuordnen und danach die Querunterteilungsbretter 53', 53" derart zu verschieben, dass die Frachtfächer 51 bis 51"', insbesondere die Frachtfächer 51', 51", eine optimale Breite für die entsprechenden Frachtstücke aufweisen.

Ebenso kann die Bodenfrachtaufnahme, wie diese in Fig. 4 in einer Draufsicht (Blickrichtung auf das Unterdeck 110) gezeigt wird, mit verschiebbaren Querunterteilungsbrettern 53 bis 53" ausgestattet sein, um die Vielzahl von Frachtfächern 61 bis 61"' bezüglich ihrer Abmessung zu verändern.

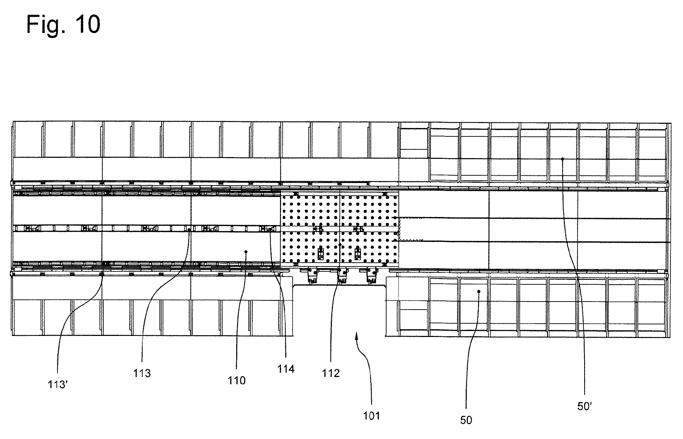

Bereits das Vorsehen der Bodenfrachtaufnahme 60 wie dies in den Fig. 2 und 5 gezeigt wird, kann als eine selbstständige Erfindung angesehen werden. So ermöglicht diese Bodenfrachtaufnahme 60 eine wesentlich bessere Nutzung des Unterdeckfrachtraums 111. Dies kann dadurch gewährleistet werden, dass Bereiche des Frachtraums, die üblicherweise nicht genutzt werden konnten, als Stauraum zur Verfügung stehen. Beispielsweise kann die Bodenfrachtaufnahme 60 ein begehbares oder befahrbares Unterdeck 110, wie dieses beispielsweise in Fig. 10 gezeigt wird, ersetzen. Es ist offensichtlich, dass die Bodenfrachtaufnahme 60 mit ihrer Ausgestaltung wesentlich besser an die konkave Form des Flugzeugrumpfs 105 angepasst werden kann, als dies mit einem herkömmlichen Frachtdeck bewerkstelligt werden kann. Insofern verbleiben keine ungenutzten Hohlräume.

Des Weiteren zeigt es sich, dass eine Bodenfrachtaufnahme 60, die Frachtöffnungen nach oben hin aufweist, besonders vorteilhaft durch einen Roboter 10, 10' beladen werden kann, der an einer Deckenkonstruktion aufgehängt ist.

Wie bereits erläutert, kann der Roboter 10 oder die Roboter 10, 10' dazu eingesetzt werden, um Frachtstücke, die über die Ladeluke 101 bereitgestellt werden, zu verstauen. Ein derartiger Ladevorgang ist besonders vorteilhaft für Flugzeuge, die Frachträume mit geringer Bauhöhe (z.B. Standardrumpfflugzeuge oder Zubringerflugzeuge) aufweisen. Um ein schnelles Beladen und auch Entladen sicherzustellen, können wie in Fig. 5 gezeigt, mehrere Roboter vorgesehen werden. Diese sind vorzugsweise an einer Linearführung aufgehängt, die ein Hin- und Herfahren der Roboter 10 vom Bug 103 zum Heck 102 ermöglichen. Es ist denkbar, dass die Roboter 10, 10' jeweils eine eigene Linearführung haben, und nebeneinander im Unterdeckfrachtraum 111 hin- und herfahren. Vorzugsweise sind diese Linearführungen jedoch miteinander verbunden, so dass die Roboter 10, 10' an der Decke des Unterdeckfrachtraums 111 zirkulieren können. In einer Draufsicht auf den Unterdeckfrachtraum 111 kann beispielsweise eine Zirkulation im oder gegen den Uhrzeigersinn erfolgen.

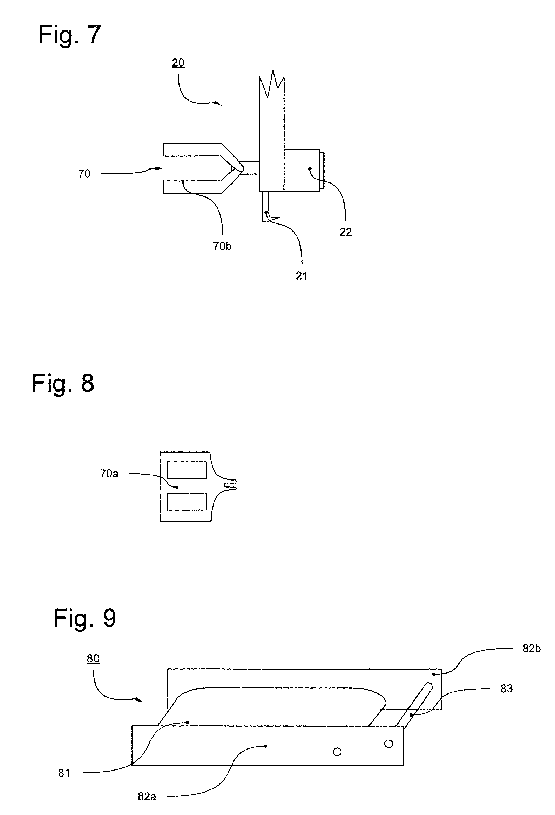

Für den geeigneten Transport der Frachtstücke ist die Ausstattung des Roboterarms 20 entscheidend. Fig. 7 zeigt eine beispielhafte Ausstattung eines Endabschnitts dieses Roboterarms 20. Dieser Endabschnitt verfügt über mindestens ein, vorzugsweise mindestens zwei Werkzeuge, nämlich ein Greifwerkzeug 70 und einen diesem gegenüber angeordneten Unterdruckkopf 22. Der Unterdruckkopf 22 kann dafür verwendet werden, um luftundurchlässige Oberflächen anzusaugen. Beispielsweise kann der Unterdruckkopf 22 dazu verwendet werden, um einen Hartschalenkoffer anzusaugen und so lange festzuhalten, bis dieser in einem der Frachtfächer 51 bis 51"', 61 bis 61"' verstaut ist.

Das Greifwerkzeug 70 hat einen ersten Greifer 70a und einen zweiten Greifer 70b, die dazu geeignet sind, weiche Frachtstücke, beispielsweise Rucksäcke, aufzunehmen. Die Fig. 8 zeigt eine Draufsicht auf den ersten Greifer 70a. Dieser
ist flächig ausgebildet, so dass er größere Frachtstücke, beispielsweise mit einer Länge von ca. 50 cm aufnehmen kann. Der zweite Greifer 70b kann in
korrespondierender Weise ausgebildet sein.

An Stelle des Greifwerkzeugs 70 kann ein Ablagewerkzeug 80 wie in der Fig. 9 gezeigt, verwendet werden. Dieses verfügt über ein Förderband 81 und zwei Seitenbegrenzungen 82a, 82b, die wechselseitig an den Seiten des Förderbands 81 angeordnet sind. Das Förderband lässt sich mittels eines Aktuators in eine erste und eine zweite Förderrichtung antreiben. Zur Aufnahme eines Frachtstücks wird das Förderband 81 von dem Roboter 10 derart nah an das Frachtstück herangefahren, dass das Förderband 81 das Frachtstück berührt. Danach erfolgt eine Förderung in die erste Förderrichtung, so dass das Frachtstück auf das Ablagewerkzeug 80 transportiert wird. Dann kann der Roboter das Frachtstück an eine geeignete Position verfahren und dort das Förderband 81 derart betreiben, dass dieses in die zweite Förderrichtung läuft und das Frachtstück abgeladen ("ausgespuckt") wird.

Erfindungsgemäß sind zahlreiche andere Ausführungsformen der Greifwerkzeuge denkbar. Beispielsweise könnte ein Greifwerkzeug verwendet werden, das dazu geeignet ist, Henkel von Taschen oder Koffern aufzunehmen.

Die beschriebenen Be- und Entladevorgänge können durch ein zentrales oder ein dezentrales Rechensystem implementiert werden. So umfasst eine erfindungsgemäße Frachtverwaltungs-Einrichtung 200 zumindest eine Steuereinheit 210, die in kommunikativer Verbindung mit mindestens einem Roboter 10 steht. Gemäß der Fig. 6 besteht eine kommunikative Verbindung zu den beiden Robotern 10, 10'. Die Steuereinheit 210 steuert diese Roboter 10, 10'. Entsprechende Steueralgorithmen sind auf einer Speichereinrichtung 211 hinterlegt. Unter anderem werden Antriebseinheiten zum Verfahren der Roboter 10, 10' entlang der Längsrichtung des Flugzeugs sowie Servomotoren zum Bewegen der Roboterarme 20 von der Steuereinheit 210 aktiviert. Auch die Servomotoren für an den Roboterarmen 20 vorgesehene Werkzeuge können von der Steuereinheit 210 betätigt werden. Des Weiteren kann die Steuereinheit 210 mit der Frachtstückaufnahme-Einrichtung 220 in kommunikativer Verbindung stehen. Diese umfasst in einem Ausführungsbeispiel die Eingabe-Einrichtung 221, die Ausgabeeinrichtung 222 sowie die RFID-Leseeinrichtung 223. Des Weiteren beinhaltet die Frachtstückaufnahme-Einrichtung 220 den Lift 30, der ebenfalls von der Steuereinheit 210 gesteuert werden kann. Insofern ist es möglich, die Aktivitäten der Roboter 10, 10' mit denen des Lifts 30 zu koordinieren und auf Eingabesignale von der Eingabe-Einrichtung 221 oder der Lese-Einrichtung 223 zu reagieren.

In einem weiteren Ausführungsbeispiel befinden sich in dem Passagierraum 121 weitere RFID-Lese-Einrichtungen 231, 231'. Diese sind derart angebracht, dass
sie die Positionen von mit RFID-Tags versehenen Passagieren ermitteln können. Soweit es vor dem Lift 30 zu einer Schlange von Passagieren kommt, können die RFID-Lese-Einrichtungen 231, 231' die Reihenfolge der einzelnen Passagiere
innerhalb der Schlange bestimmen (z.B. per Triangulation). Im Endeffekt stellen die RFID-Lese-Einrichtungen 231, 231', die in dem Passagierraum 121 installiert
sind, eine Passagiererfassungs-Einrichtung 230 bereit, die ebenfalls in kommunikativer Verbindung mit der Steuereinheit 210 stehen kann. Soweit die Steuereinheit 210 einem bestimmten Passagier anhand dessen RFID-Tag ein bestimmtes Frachtstück zuordnen kann, ist es möglich, die einzelnen Anforderungen, die der Lift 30 bedienen muss, zu prognostizieren. Insofern kann die Frachtverwaltungs-Einrichtung 200 bereits Vorkehrungen treffen, um die anstehenden Aufträge (z.B. Abholung eines bestimmten Frachtstücks) zeitnah bearbeiten zu können. In diesem Zusammenhang ist es auch möglich, einen Pufferbereich nahe dem Liftbereich vorzusehen. Dieser Pufferbereich kann dazu genutzt werden, Frachtstücke zwischenzulagern, bis diese angefordert werden oder bis die Liftkabine für diese bereitsteht.

Eine weitere erfindungsgemäße Idee besteht darin, den Roboter 10 bzw. die Roboter 10, 10' nicht nur zur Verladung von einzelnen Frachtstücken einzusetzen. Vielmehr können die Roboter 10, 10' auch dazu eingesetzt werden, Frachtcontainer zu verladen.

Fig. 10 zeigt eine Draufsicht auf ein erfindungsgemäßes Frachtdeck. Im rechten Bereich sind Frachtregale 50, 50' vorgesehen, um Einzelfrachtstücke aufzunehmen. Im Endeffekt kann hier also eine Einzelfrachtstückverladung erfolgen. Linksseitig der Ladeluke 101 befindet sich das Unterdeck 110, das dazu geeignet ist, Frachtcontainer zu beherbergen. Hierfür sind im Bodenbereich passive Frachtantriebseinheiten, nämlich die Kugelmatten 112 und die Rollenbahnen 113, 113' vorgesehen. Des Weiteren gibt es Riegelelemente 114, die es ermöglichen, die Frachtcontainer an bestimmten Positionen festzusetzen. Zum Verladen eines Frachtcontainers kann beispielsweise dieser über ein Förderband in die Ladeluke 101 eingebracht werden. Danach fährt der Roboter 10 heran und verschiebt den Frachtcontainer nach links auf den Rollenbahnen 113, 113'. Sobald der Frachtcontainer seine Zielposition erreicht hat, kann der Roboter 10 dazu eingesetzt werden, um Riegelelemente 114 derart zu aktivieren, dass der Frachtcontainer in der vorgegebenen Position gehalten wird. Beispielsweise können die Riegelelemente 114 Riegelkrallen aufweisen, die sich aus einer Ruheposition in eine Halteposition verschwenken lassen. Dieser Verschwenkungsvorgang kann durch den Roboter 10 ausgelöst werden. Hierfür kann der Roboterarm 20 optional, wie in der Fig. 7 gezeigt, mit einer Riegelkralle 21 - im Endeffekt ein Haken - ausgestattet sein.

Die beschriebenen Roboter 10, 10' können auch dafür ausgerüstet sein, Netze als Frachtraumunterteilungen aufzuspannen. Andererseits können derartige Netze auch in Verbindung mit den Frachtregalen 50, 50' oder der Bodenfrachtaufnahme 60 verwendet werden, um ein Herausfallen der Frachtstücke aus den Frachtfächern 51 bis 51"', 61 bis 61"' zu verhindern.

Die Funktionsweise der beschriebenen Frachtverwaltungs-Einrichtung 200 kann dadurch verwendet werden, dass Bilderfassungs-Einrichtungen vorgesehen sind. Beispielsweise kann eine entsprechende Bilderfassungs-Einrichtung an den Robotern 10, 10' vorgesehen werden, um die grobe Ausgestaltung eines Frachtstücks, das es zu transportieren gilt, zu erfassen. Auch beim "Einparken" der Frachtstücke in die Frachtfächer 51 bis 51"', 61 bis 61"' kann eine Bilderfassung hilfreich sein.

Neben den bereits erwähnten Sensoren können auch Wärme, Rauch, Feuersensoren vorgesehen sein, um die Funktionalität der Frachtverwaltungs-Einrichtung 200 zu verbessern und mögliche Gefahrensituationen abzuwenden. Theoretisch wäre es auch möglich, intelligente, insbesondere selbstlernende Systeme einzusetzen, um die Frachtverwaltungs-Einrichtung 200 zu verbessern.

### Bezugszeichenliste

- 10, 10': Roboter
- 20: Roboterarm
- 21: Riegelkralle
- 22: Unterdruckkopf
- 30: Lift
- 31: Liftkabine
- 33: obere Liftöffnung
- 34: untere Liftöffnung
- 50, 50': Frachtregal
- 51, 51', 51", 51'": Frachtfach
- 52, 52': Längsunterteilungsbrett
- 53, 53', 53": Querunterteilungsbrett
- 60: Bodenfrachtaufnahme
- 61, 61', 61", 61'": Frachtfach
- 63, 63', 63": Querunterteilungsbrett
- 70: Greifwerkzeug
- 70a, 70b: Greifer
- 80: Ablagewerkzeug
- 81: Förderband
- 82a, 82b: Seitenbegrenzung
- 83: Befestigungselement
- 100: Flugzeug
- 101: Ladeluke
- 102: Heck
- 103: Bug
- 105: Flugzeugrumpf
- 110: Unterdeck ("lower deck")
- 111: Unterdeckfrachtraum
- 112: Kugelmatte
- 113, 113': Rollenbahn
- 114: Riegelelement
- 120: Mitteldeck
- 121: Passagierraum
- 130: Oberdeck
- 131: Oberdeckfrachtraum ("crown-Bereich")
- 200: Frachtverwaltungs-Einrichtung
- 210: Steuereinheit
- 211: Speichereinrichtung
- 220: Frachtstückaufnahme-Einrichtung
- 221: Eingabe-Einrichtung
- 222: Ausgabe-Einrichtung
- 223: RFID-Leseeinrichtung
- 230: Passagiererfassungs-Einrichtung
- 231, 231': RFID-Lese-Einrichtung

## Patentansprüche

1. Flugzeug (100) mit mindestens einem Passagierraum (121), mindestens einem
Frachtraum (111) und mindestens einer Frachtverwaltungs-Einrichtung (200),
wobei die Frachtverwaltungs-Einrichtung (200) mindestens eine Frachtstückaufnahme-Einrichtung (220) zur Aufnahme eines Frachtstücks im
Passagierraum, mindestens eine Eingabe-Einrichtung (221) zur Erfassung eines
dem Frachtstück zugeordneten Codes und mindestens eine Frachtstückverlade-Einrichtung zum Verstauen von Frachtstücken aus dem Passagierraum in dem Frachtraum (111) umfasst, nämlich einen Roboter (10, 10') mit mindestens einem Roboterarm (20) mit mindestens einem Aufnahmewerkzeug (21, 22, 70, 80) zur Aufnahme von Frachtstücken, wobei die Frachtverwaltungs-Einrichtung (200) dazu ausgebildet ist, nach der Eingabe eines Codes, zumindest den Roboter (10, 10') derart anzusteuern, dass das zugehörige Frachtstück aus dem Frachtraum (111) in der Frachtstückaufnahme-Einrichtung (220) im Passagierraum (121) bereitgestellt wird, wobei ein Frachtdeck (110) des Frachtraums (111) passive Frachtfördereinrichtungen (112, 113, 113') umfasst und der Roboter (10, 10') zum Verschieben von auf den Frachtfördereinrichtungen gelagerten Frachteinheiten ausgebildet und/oder angeordnet ist.

2. Flugzeug nach Anspruch 1,
**dadurch gekennzeichnet, dass** der Roboter (10, 10') verschiebbar an einer Deckenkonstruktion (120) und/oder Wandkonstruktion des Frachtraums (111) angeordnet ist.

3. Flugzeug nach Anspruch 1 oder 2,
**gekennzeichnet durch**
- eine an der Deckenkonstruktion (120) und/oder Wandkonstruktion befestigte Halteeinrichtung mit mindestens einer Linearführung, und
- eine Antriebseinheit zum Verfahren des an der Halteeinrichtung befestigten Roboters (10, 10') entlang einer Längsachse des Flugzeugs.

4. Flugzeug nach Anspruch 3
**dadurch gekennzeichnet, dass**
die Halteeinrichtung eine umlaufende Linearführung umfasst, an der mindestens zwei Roboter (10, 10') befestigt sind.

5. Flugzeug nach einem der vorhergehenden Ansprüche,
**dadurch gekennzeichnet, dass**
das Frachtdeck (110) mindestens ein Funktionselement umfasst, das mindestens eine erste und mindestens eine zweite Funktionseinstellung hat, wobei der Roboterarm (20) mindestens ein Werkzeug (21) zum Wechseln zwischen den Funktionseinstellungen aufweist.

6. Flugzeug (100) nach einem der vorhergehenden Ansprüche,
**gekennzeichnet durch**
eine Vielzahl von Frachtfächern (51-51'", 61-61"') im Frachtraum, die jeweils **durch** eine Vielzahl von Seitenwänden ausgebildet sind und mindestens eine Frachtöffnung zum Einlegen und Herausnehmen von Frachtstücken aufweisen, wobei zumindest einige der Seitenwände derart flexibel und/oder drehbeweglich und/oder schiebebeweglich miteinander verbunden sind, dass die Abmessungen zumindest eines Frachtfachs (51-51"', 61-61"') auf Grund der Verschiebung mindestens einer Seitenwand veränderbar sind.

7. Flugzeug nach Anspruch 6,
**gekennzeichnet durch**
Längsunterteilungen (52, 52') und Querunterteilungen (53, 53', 63, 63', 63") zur Bildung der Seitenwände, wobei mindestens eine Längsunterteilung (52, 52') im Wesentlichen parallel zu den Querunterteilungen (53, 53', 63, 63', 63") und/oder mindestens eine Querunterteilung (53, 53', 63, 63', 63") im Wesentlichen parallel zu den Längsunterteilungen (52, 52') verschiebbar in der Frachtaufbewahrungseinrichtung gelagert sind.

8. Flugzeug nach Anspruch 6 oder 7,
**dadurch gekennzeichnet, dass**
mindestens ein Frachtfach (51-51'", 61-61'") eine Verschlusseinrichtung, insbesondere ein Rollo und/oder ein Netz, zum zumindest teilweisen Verschließen der Frachtöffnung aufweist.

9. Flugzeug (100) nach einem der Ansprüche 1 bis 5,
**gekennzeichnet durch**
mindestens eine Frachtaufbewahrungseinrichtung im Frachtraum mit einer Vielzahl von Frachtfächern (51-51"', 61-61'"), wobei mindestens eines der Frachtfächer (51-51"', 61-61"') derart ausgebildet und/oder angeordnet ist, dass es von oben, insbesondere in eine Richtung senkrecht zu einem/dem Frachtdeck (110) des Frachtraums (111), beladbar ist.

10. Flugzeug nach einem der vorhergehenden Ansprüche,
**dadurch gekennzeichnet, dass**
der Roboter (10, 10') mindestens zwei Aufnahmewerkzeuge (21, 22, 70, 80) zur Aufnahme von Frachtstücken und das Flugzeug (100) mindestens eine Bilderfassungseinrichtung zur Bereitstellung mindestens eines Bilds eines zu befördernden Frachtstücks umfassen, wobei der Roboter (10, 10') dazu ausgebildet ist, anhand des Bilds eines der Aufnahmewerkzeuge (21, 22, 70, 80) zur Aufnahme des zu befördernden Frachtstücks auszuwählen.

11. Flugzeug nach Anspruch 10,
**dadurch gekennzeichnet, dass**
das Aufnahmewerkzeug (21, 22, 70, 80) mindestens einen Unterdruckkopf (22) zur Halterung von Frachtstücken mit einer zumindest teilweise luftundurchlässigen Außenhaut umfasst.

12. Flugzeug nach einem der Ansprüche 10 oder 11,
**dadurch gekennzeichnet, dass**
das Aufnahmewerkzeug (21, 22, 70, 80) mindestens ein Greifwerkzeug zum Greifen von Frachtstücken und/oder mindestens ein Förderband (81) zum Aufnehmen und Ablegen von Frachtstücken umfasst.

13. Flugzeug nach einem der vorhergehenden Ansprüche,
**dadurch gekennzeichnet, dass**
die Frachtstückaufnahme-Einrichtung einen Lift (30) und/oder eine Verbindungsöffnung und/oder eine Rutsche zum Transport der Frachtstücke aus dem Passagierraum in den Frachtraum umfasst.

14. Flugzeug nach einem der vorhergehenden Ansprüche,
**dadurch gekennzeichnet, dass**
die Eingabe-Einrichtung (221, 223) eine Leseeinrichtung für eine vorzugsweise am oder im Frachtstück angeordnete Identifikationseinrichtung, insbesondere einen Passivtransponder und/oder einen 2D- und/oder 3D-Code, umfasst.

15. Flugzeug nach einem der vorhergehenden Ansprüche,
**dadurch gekennzeichnet, dass**
die Frachtverwaltungs-Einrichtung (200) dazu ausgebildet ist, für ein in die Frachtstückaufnahme-Einrichtung (220) eingegebenes Frachtstück eine Aufbewahrungsposition zu ermitteln, die Frachtstückverlade-Einrichtung derart anzusteuern, dass das Frachtstück in der Aufbewahrungsposition verstaut wird, und die Aufbewahrungsposition vorzugsweise in Verbindung mit einem Code, der dem Frachtstück und/oder einer Person zugeordnet ist, zu speichern.

16. Flugzeug nach einem der vorhergehenden Ansprüche,
**gekennzeichnet durch**
eine Passagiererfassungs-Einrichtung (230) zur Erfassung der Position von mindestens einem Passagier und zur Bereitstellung von entsprechenden Positionsdaten, wobei die Frachtverwaltungs-Einrichtung dazu ausgebildet ist, die Positionsdaten bei einem Entladevorgang zu berücksichtigen.

## Claims

1. Aircraft having at least one passenger cabin (121), at least one cargo hold (111) and at least one cargo management device (200),
wherein the cargo management device (200) comprises at least one cargo item receiving device (220) for receiving a cargo item in the passenger cabin, at least one input device (221) for detecting a code assigned to the cargo item, and at least one cargo item loading device for storing cargo items from the passenger cabin in the cargo hold (111), i.e. a robot (10, 10') having at least one robot arm (20) with at least one pick-up tool (21, 22, 70, 80) for picking up cargo items,
wherein the cargo management device (200) is configured to control at least the robot (10, 10'), upon a code being input, in such a manner that the associated cargo item from the cargo hold (111) is provided in the cargo item receiving device (220) in the passenger cabin (121),
wherein a cargo deck (110) of the cargo hold (111) comprises passive cargo conveying means (112, 113, 113'), and the robot (10, 10') is configured and/or arranged to displace cargo units supported on the cargo conveying means.

2. Aircraft according to claim 1,
**characterized in that** the robot (10, 10') is arranged to be displaceable on a ceiling construction (120) and/or wall construction of the cargo hold (111).

3. Aircraft according to claim 1 or 2,
**characterized by**
- a holding device having at least one linear guideway and being attached to the ceiling construction (120) and/or the wall construction, and
- a drive unit for moving the robot (10, 10') attached to the holding device along a longitudinal axis of the aircraft.

4. Aircraft according to claim 3,
**characterized in that**
the holding device comprises a circumferential linear guideway to which at least two robots (10, 10') are attached.

5. Aircraft according to any one of the preceding claims,
**characterized in that**
the cargo deck (110) comprises at least one functional element which has at least one first functional setting and at least one second functional setting, wherein the robot arm (20) features at least one tool (21) for switching between the functional settings.

6. Aircraft (100) according to any one of the preceding claims,
**characterized by**
a plurality of cargo compartments (51 - 51"', 61 - 61"') within the cargo hold which are each formed by a plurality of sidewalls and feature at least one cargo opening for inserting and taking out cargo items, wherein at least some of the sidewalls are interconnected to be flexible and/or rotatable and/or displaceable in such a manner that the dimensions of at least one cargo compartment (51 - 51"', 61 - 61"') are variable due to the displacement of at least one sidewall.

7. Aircraft according to claim 6,
**characterized by**
longitudinal partitions (52, 52') and transverse partitions (53, 53', 63, 63', 63") for forming the sidewalls, wherein, to be displaceable in the cargo storage device, at least one longitudinal partition (52, 52') is supported substantially in parallel to the transverse partitions (53, 53', 63, 63', 63") and/or at least one transverse partition (53, 53', 63, 63', 63") is supported substantially in parallel to the longitudinal partitions (52, 52').

8. Aircraft according to claim 6 or 7,
**characterized in that**
at least one cargo compartment (51 - 51"', 61 - 61"') comprises a closing device such as a roller blind and/or a net for at least partially closing the cargo opening.

9. Aircraft (100) according to any one of claims 1 to 5,
**characterized by**
at least one cargo storage device within the cargo hold and having a plurality of cargo compartments (51 - 51"', 61 - 61'"), wherein at least one of the cargo compartments (51 - 51"', 61 - 61"') is configured and/or arranged such that it can be loaded from above, in particular in a direction perpendicular to a/the cargo deck (110) of the cargo hold (111).

10. Aircraft according to any one of the preceding claims,
**characterized in that**
the robot (10, 10') comprises at least two pick-up tools (21, 22, 70, 80) for picking up cargo items, and the aircraft (100) comprises at least one image capturing device for providing at least one image of a cargo item to be conveyed, wherein the robot (10, 10') is configured to select one of the pick-up tools (21, 22, 70, 80) for picking up the cargo item to be conveyed based on the image.

11. Aircraft according to claim 10,
**characterized in that**
the pick-up tool (21, 22, 70, 80) comprises at least one vacuum head (22) for holding cargo items having an at least partially airtight outer skin.

12. Aircraft according to any of claims 10 or 11,
**characterized in that**
the pick-up tool (21, 22, 70, 80) comprises at least one gripping tool for gripping cargo items and/or at least one conveyor belt (81) for receiving and depositing cargo items.

13. Aircraft according to any one of the preceding claims,
**characterized in that**
the cargo item receiving device comprises a lift (30) and/or a connecting opening and/or a chute for transporting the cargo items from the passenger cabin into the cargo hold.

14. Aircraft according to any one of the preceding claims,
**characterized in that**
the input device (221, 223) comprises a reading means for an identification means that is preferably arranged on or in the cargo item, such as a passive transponder and/or a 2D code and/or 3D code.

15. Aircraft according to any one of the preceding claims,
**characterized in that**
the cargo management device (200) is configured to determine a storage position for a cargo item placed in the cargo item receiving device (220), to control the cargo item loading device in such a manner that the cargo item will be stowed in the storage position, and to memorize the storage position preferably in association with a code that is assigned to the cargo item and/or a person.

16. Aircraft according to any one of the preceding claims,
**characterized by**
a passenger acquisition device (230) for acquiring the position of at least one passenger and for providing corresponding positional data, wherein the cargo management device is configured to take into account the positional data during an unloading operation.

## Revendications

1. Avion comprenant au moins un compartiment passager (121), au moins un compartiment de fret (111) et au moins un système de gestion de fret (200),
dans lequel le système de gestion de fret (200) comprend au moins un système de réception de fret (220) pour la réception d'un élément de fret dans le compartiment passager, au moins un système de saisie (221) pour la saisie d'un code associé à l'élément de fret, et au moins un système de transfert de fret pour le stockage d'éléments de fret depuis le compartiment passager jusque dans le compartiment de fret (111), à savoir un automate (10, 10') comprenant au moins un bras d'automate (20) avec au moins un outil de réception (21, 22, 70, 80) pour la réception d'éléments de fret ;
dans lequel le système de gestion de fret (200) est réalisé pour piloter, après la saisie d'un code, au moins l'automate (10, 10') de telle manière que l'élément de fret associé est mis à disposition en provenance du compartiment de fret (111) dans le système de réception de fret (220) dans le compartiment passager (121),
dans lequel une plate-forme de fret (110) du compartiment de fret (111) inclut des systèmes de convoyage de fret (112, 113, 113') passif, et l'automate (10, 10') est réalisé et/ou agencé pour déplacer des unités de fret stockées sur les systèmes de convoyage de fret.

2. Avion (100) selon la revendication 1,
**caractérisé en ce que** l'automate (10, 10') est agencé déplaçable sur une construction de plafond (120) et/ou une construction de paroi du compartiment de fret (111).

3. Avion selon la revendication 1 ou 2,
**caractérisé par**
- un dispositif de maintien fixé sur la construction de plafond (120) et/ou sur la construction de paroi, avec au moins un guidage linéaire, et
- une unité d'entraînement pour déplacer l'automate (10, 10') fixé sur le dispositif de maintien le long d'un axe longitudinal de l'avion.

4. Avion selon la revendication 3,
**caractérisé en ce que** le dispositif de maintien inclut un guidage linéaire périphérique, sur lequel sont fixés au moins deux automates (10, 10').

5. Avion selon l'une des revendications précédentes,
**caractérisé en ce que** la plate-forme de fret (110) inclut au moins un élément fonctionnel qui présente au moins un premier et au moins un second positionnement fonctionnel, dans lequel le bras d'automate (20) comprend au moins un outil (21) pour changer entre les positionnements fonctionnels.

6. Avion (100) selon l'une des revendications précédentes,
**caractérisé par**
une pluralité de cases de fret (51-51"', 61-61"') dans le compartiment de fret, qui sont réalisées chacune par une pluralité de parois latérales et comportent au moins une ouverture de fret pour la mise en place et pour l'enlèvement d'éléments de fret, dans lequel
au moins quelques-unes des parois latérales sont reliées les unes aux autres de manière flexible et/ou mobile en rotation et/ou mobile en translation, de telle façon que les dimensions de l'une au moins des cases de fret (51-51"', 61-61'"') sont modifiables en raison du déplacement d'au moins une paroi latérale.

7. Avion selon la revendication 6,
**caractérisé par** des subdivisions longitudinales (52, 52') et des subdivisions transversales (53, 53', 63, 63', 63") pour la formation des parois latérales, et au moins une subdivision longitudinale (52, 52') est montée déplaçable sensiblement parallèlement aux subdivisions transversales (53, 53', 63, 63', 63"), et/ou au moins une subdivision transversale (53, 53', 63, 63', 63") est montée déplaçable sensiblement parallèlement aux subdivisions longitudinales (52, 52') dans le système de stockage de fret.

8. Avion selon la revendication 6 au 7,
**caractérisé en ce qu'**au moins une case de fret (51-51"', 61-61"') comprend un moyen de fermeture, en particulier un volet déroulant et/ou un filet, pour refermer au moins partiellement l'ouverture de fret.

9. Avion (100) selon l'une des revendications 1 à 5,
**caractérisé par** au moins un moyen de stockage de fret dans le compartiment de fret avec une pluralité de cases de fret (51-51"', 61-61"'), dans lequel l'une au moins des cases de fret (51-51"', 61-61'") est réalisée et/ou agencée de telle façon qu'elle peut être chargée depuis le haut, en particulier dans une direction perpendiculaire à une plate-forme de fret ou à la plate-forme de fret (110) du compartiment de fret (111).

10. Avion selon l'une des revendications précédentes,
**caractérisé en ce que** l'automate (10, 10') inclut au moins deux outils de réception (21, 22, 70, 80) pour la réception d'éléments de fret, et l'avion (100) inclut au moins un système de prise d'images pour la mise à disposition d'au moins une image d'un élément de fret à convoyer, et l'automate (10, 10') est réalisé pour sélectionner au moyen de l'image l'un des outils de réception (21, 22, 70, 80) pour la réception de l'élément de fret à convoyer.

11. Avion selon la revendication 10,
**caractérisé en ce que** l'outil de réception (21, 22, 70, 80) inclut au moins une tête à dépression (22) pour le maintien d'éléments de fret ayant une enveloppe extérieure au moins partiellement imperméable à l'air.

12. Avion selon l'une des revendications 10 ou 11,
**caractérisé en ce que** l'outil de réception (21, 22, 70, 80) inclut au moins un outil de préhension pour prendre des éléments de fret et/ou au moins une bande de convoyage (80) pour la réception et la dépose d'éléments de fret.

13. Avion selon l'une des revendications précédentes,
**caractérisé en ce que** le système de réception de fret inclut un ascenseur (30) et/ou une ouverture de liaison et/ou un toboggan pour le transport des éléments de fret hors du compartiment passager jusque dans le compartiment de fret.

14. Avion selon l'une des revendications précédentes,
**caractérisé en ce que** le système de saisie (221, 223) inclut un moyen de lecture pour un dispositif d'identification agencé de préférence sur ou dans l'élément de fret, en particulier un transpondeur passif et/ou un code à deux dimensions et/ou à trois dimensions.

15. Avion selon l'une des revendications précédentes,
**caractérisé en ce que** le système de gestion de fret (200) est réalisé pour déterminer, pour un élément de fret introduit dans le système de réception de fret (220), une position de stockage et pour piloter le système de transfert de fret de telle façon que l'élément de fret est rangé dans la position de stockage, et pour mémoriser la position de stockage, de préférence en association avec un code qui est associé à l'élément de fret et/ou à une personne.

16. Avion selon l'une des revendications précédentes,
**caractérisé par** un système de détection de passager (230) pour la détection de la position d'au moins un passager et pour la mise à disposition de données de position correspondantes, et le système de gestion de fret est réalisé pour tenir compte des données de position lors d'une opération de déchargement.
